Europäisches Patentamt

(19) European Patent Office

Office européen des brevets

(11) Veröffentlichungsnummer: **0 063 639**
**A2**

(12) **EUROPÄISCHE PATENTANMELDUNG**

(21) Anmeldenummer: **81109262.6**

(22) Anmeldetag: **29.10.81**

(51) Int. Cl.³: **H 04 N 7/00**

(30) Priorität: **24.04.81 DE 3116422**

(43) Veröffentlichungstag der Anmeldung: **03.11.82**
**Patentblatt 82/44**

(84) Benannte Vertragsstaaten: **AT CH DE FR GB IT LI NL SE**

(71) Anmelder: **SIEMENS AKTIENGESELLSCHAFT Berlin und München, Postfach 22 02 61, D-8000 München 22 (DE)**

(72) Erfinder: **Starck, Alexander, Dipl.-Phys., Terhallestrasse 45, D-8000 München 90 (DE)**
Erfinder: **Christiansen, Hans-Martin, Dipl.-Ing., Minorstrasse 12a, D-8000 München 71 (DE)**
Erfinder: **Möhrmann, Karl-Heinz, Dipl.-Ing., Kemptener Strasse 65, D-8000 München 71 (DE)**

(54) **Digitales Breitband-Kommunikationssystem.**

(57) Die Erfindung bezieht sich auf ein digitales Breitband-Kommunikationssystem, bei dem eine Zentrale (I) über Glasfasern (II) mit Teilnehmerstationen (III) verbunden ist. Diese können Fernsehprogramme, Tonprogramme, Bildfernsprechsignale und Fernsprechsignale empfangen und Bildfernsprechsignale, Fernsprechsignale und verschiedene Rückkanalsignale aussenden. Die Erfindung besteht in einer praktischen Realisierung eines derartigen Systems. Bei dieser sind in der Zentrale (I) für von außen ankommende Fernsehprogrammsignale einem FBAS-Signal/Komponentensignal-Umsetzer und Codierer (2) sowie einer Einrichtung (3) zur Zeilenfrequenzsynchronisation (III) vorgesehen, während die Teilnehmerstationen (III) Farbfernsehempfänger (20) für Komponentensignale und Farb-Bildfernsprechapparate (21) enthalten, die zeilenfrequenzsynchronisierte Komponentensignale aussenden.

ACTORUM AG

SIEMENS AKTIENGESELLSCHAFT      Unser Zeichen:

Berlin und München              VPA 81 P 6 4 5 6 E

## Digitales Breitband-Kommunikationssystem

Die Erfindung bezieht sich auf ein digitales Breitband-Kommunikationssystem, bei dem von einer Zentrale über Glasfasern Fernsehprogrammsignale für Farbe oder Schwarz-Weiß, Tonprogrammsignale, Bildfernsprechsignale für Farbe oder Schwarz-Weiß, Fernsprechsignale und beliebige andere Signale zu Teilnehmerstationen und bei dem von diesen in Gegenrichtung Bildfernsprechsignale für Farbe oder Schwarz-Weiß, Fernsprechsignale und beliebige Rückkanalsignale übertragen werden können, bei dem die Zentrale die Signale aus dem öffentlichen Netz und/oder von sonstigen Zulieferern und/oder aus eigener Erzeugung oder Speicherung empfängt, vermittelt, zu einem Zeitmultiplexsignal zusammensetzt, in optische Signale umsetzt und zu den Teilnehmerstationen aussendet, bei dem die Teilnehmerstationen die bei ihnen erzeugten Signale zu Zeitmultiplexsignalen zusammensetzen, in optische Signale umsetzen und zur Zentrale aussenden und bei dem die von außen empfangenen Fernsehprogrammsignale für Farbe FBAS-Signale oder Komponentensignale und die von außen empfangenen digitalen Bildfernsprechsignale für Farbe Komponentensignale sind.

Ein derartiges Breitband-Kommunikationssystem ist aus dem Tagungsband der "Fourth European Conference on Electronics Eurocon 80", Stuttgart, 24.-28.3.80, Seiten 173 bis 176 bekannt. Dieses enthält neben der doppelt gerichteten Bildkommunikation (Bildfernsprechen) auch Fernsehverteilsysteme, welche zur Verteilung von Fern-sehprogrammsignalen dienen.

23.4.81 - Wke 1 Wis

Beim Bildfernsprechen - auch im Weitverkehr - kann bei digitaler Übertragung von einem synchronen Netz ausgegangen werden, in welchem an jeder Stelle exakt dieselben Taktfrequenzen verfügbar sind.

Anders ist der Fall bei der Fernseh-Programmverteilung im Teilnehmerbereich. Dabei werden in der Regel in einer Zentrale mehrere Fernseh-Rundfunk-Programme als Analogsignale empfangen und dann digitalisiert.

Für die Digitalisierung der Bildsignale ist die Abtastrate sehr wesentlich. Wenn die Abtastfrequenz nicht deutlich oberhalb der zweifachen Bandgrenze des Videosignals liegt, muß, um Aliasingeffekte unterdrücken zu können und um Redundanz- und Irrelevanzreduktion zu ermöglichen, die Abtastfrequenz des Videosignals an dieses Videosignal angebunden sein. Bei getrennter (oder offener) Codierung eines Farbsignals oder bei einem Schwarz-Weiß-Signal muß die Abtastfrequenz an die Zeilenfrequenz gekoppelt sein.

In der zitierten Veröffentlichung wurde noch keine praktische Lösung für ein rein digitales System angegeben, welches zudem sowohl für Bildfernsprech- als auch für Fernsehprogrammsignale diese Forderung erfüllt.

Der Erfindung liegt die Aufgabe zugrunde, eine vorteilhafte Lösung für ein digitales Breitband-Kommunkationssystem anzugeben.

Ausgehend von einem digitalen Breitband-Kommunikationssystem der einleitend geschilderten Art wird diese Aufgabe erfindungsgemäß dadurch gelöst, daß an der Schnittstelle des Systems zu Zulieferern für ankommende Fernsehprogrammsignale in der Zentrale FBAS-Signal/Komponen-

0063639

tensignal-Umsetzer und Codierer vorgesehen sind, daß in
der Zentrale mit diesen Einrichtungen integriert oder
diesen nachgeschaltet Einrichtungen zur Zeilenfrequenz-
Synchronisation vorgesehen sind, daß in den Teilnehmerstationen Farbfernsehempfänger für den Empfang von
Komponentensignalen vorgesehen sind und daß in den Teilnehmerstationen Farb-Bildfernsprechapparate vorgesehen
sind, die zeilenfrequenzsynchronisierte Komponentensignale zur Zentrale aussenden.

Unter Komponentensignale sind beispielsweise R-, G-
und B- oder Y-, U- und V-Signale für Luminanz und
Chrominanz zu verstehen.

Bei der Erfindung wurde von der Erkenntnis ausgegangen,
daß man nicht voraussetzen kann, daß die in der Zentrale
empfangenen Fernsehprogrammsignale zeilenfrequenzmäßig
exakt synchron zueinander sind. Die verschiedenen Programme müßten daher mit etwas unterschiedlicher Abtastfrequenz abgetastet und so auch mit unterschiedlichen Datenraten weitergegeben werden. Zum Multiplexen
dieser unterschiedlichen Datenraten ist ein recht aufwendiges Stopfverfahren notwendig, das ungünstig ist,
weil dieses in jedem Empfänger durch ein entsprechend
aufwendiges Verfahren rückgängig gemacht werden muß.

Diesen Aufwand kann man verringern, indem man die einzelnen Programme in der Zentrale zuerst miteinander
synchronisiert. Das kann durch Umsetzen auf eine
leicht veränderte, aus der Systemtaktfrequenz des
digitalen Netzes ableitbare Zeilenfrequenz mittels Zeilenfrequenz-Synchronisiereinrichtungen geschehen,
wie sie heute in der Studiotechnik üblich sind.

0063639

- 4 - VPA 81 P 6456 E

Eine Zeilensynchronisiereinrichtung besteht im wesentlichen aus einem digitalen Bildspeicher, in den das ankommende Fernsehsignal nach Digitalisierung mit einer Abtastfrequenz eingeschrieben wird, die aus der ursprünglichen Zeilen- oder Farbhilfsträgerfrequenz gewonnen wurde. Das Auslesen erfolgt nach einer variablen Verzögerung mit dem Takt, der aus der neuen Zeilenfrequenz gewonnen wird. Wenn die Frequenz des Auslesetaktes größer ist als die des Einlesetaktes, wird der Bildspeicher schneller geleert als er nachgefüllt wird; deshalb wird er allmählich leer werden. In diesem Fall wird einfach das letzte Bild zweimal ausgelesen. Ist die Auslesefrequenz niedriger als die Einlesefrequenz, dann wird im Falle des Überlaufes des Bildspeichers ein Bild weggelassen. Wenn der Versatz der Frequenzen $10^{-5}$ beträgt, wird jedes $10^{5}$-te Bild wiederholt oder weggelassen, d.h. alle 4000 s erfolgt eine derartige Korrektur.

Die Zeilenfrequenz-Synchronisiereinrichtung kann dabei dem Umsetzer und Codierer nachgeschaltet oder mit diesen zusammen als eine Einheit realisiert sein. Auch kann die Codierung, also die Umsetzung in ein digitales Signal, vor oder nach der FBAS-Signal/Komponentensignal-Umsetzung erfolgen.

Werden die Zeilenfrequenzen der empfangenen Programme durch Zeilenfrequenz-Synchronisiereinrichtungen verändert, so können sie auch ohne Zusatzaufwand und ohne ein Stopfverfahren an die Taktfrequenz des digitalen Netzes angebunden werden. Dabei muß man sich allerdings an die CCIR-Empfehlungen halten. Laut CCIR-Report 624-1 ist bei PALcodierten Signalen eine Toleranz des Farbträgers und der damit verkoppelten Zeilenfrequenz von $10^{-6}$ erlaubt. Diese hohe Präzision ist notwendig, weil der Farbträger beim Empfänger rekonstruiert werden muß und nur um wenige Grad in der Phase vom empfangenen Farbträger abweichen darf, was nur mit Hilfe von Quarzoszillatoren möglich ist.

Bei Schwarz-Weiß-Signalen oder komponentenweise codierten und übertragenen Farbfernsehsignalen darf die Abweichung der Zeilenfrequenz von der Soll-Frequenz $2 \times 10^{-4}$ betragen (Standard B, G bei 625-Zeilen-Systemen). Es ist dann immer möglich, die Zeilenfrequenz so zu wählen, daß sie durch ganzzahlige Teilung aus der Systemtaktfrequenz oder einem ganzzahligen Mehrfachen derselben erzeugt werden kann, wobei die so gewonnene veränderte Zeilenfrequenz vom Nominalwert (15625 Hz bei 625-Zeilen-Systemen) um nicht mehr als die oben angegebene zulässige Toleranz abweicht. Derartige Maßnahmen sind ggf. auch zur Konversion von ankommenden Bildfernsprechsignalen aus nicht synchronen, z.B. ausländischen Netzen, anwendbar.

Aus den genannten Gründen ist es vorteilhaft, die Farbfernsehsignale nicht geschlossen, sondern komponentenweise digital zu codieren, wobei diese Codierung für die zur Verteilung bestimmten Fernsehprogrammsignale in der Zentrale und für die Bildfernsprechsignale bei den teilnehmerseitigen Kameras erfolgen kann. Die Decodierung wird in den zugehörigen Empfängern beim Teilnehmer, bei Bildfernsprechbetrieb ist dies der Teilnehmer der Gegenseite, vorgenommen. Die komponentenweise Codierung hat eine Reihe weiterer Vorteile:

Die verschiedenen Methoden der Irrelevanz- und Redundanzreduktion lassen sich günstiger auf getrennt codierte Fernsehsignale anwenden, so daß sich bei vergleichbarer Bildqualität eine niedrigere Datenrate erreichen läßt als mit geschlossener Codierung. Umgekehrt ist bei gleicher Datenrate eine höhere Bildqualität zu erwarten.

0063639

Die Decodierung des PAL-Signals kann bei Programmverteilung in der Zentrale mit einem aufwendigeren PAL-Decoder erfolgen, der eine bessere Bildqualität liefert.

In Gebieten, in denen neben PAL-Signalen auch SECAM-Signale empfangen werden, können diese nach Decodierung und Zerlegung in die Komponenten auf die gleiche Art digitalisiert werden, wie die als PAL-Signale empfangenen Signale. Der Teilnehmer benötigt also keinen Mehrnormen-Empfänger.

Für die in der Zentrale benötigten Zeilenfrequenz-Synchronisiereinrichtungen müßte das Signal vor dem Bildspeicher erst PAL-decodiert, getrennt codiert, zwischengespeichert und als PAL-Signal wieder abgegeben werden. Die zweite PAL-Codierung kann bei getrennter Codierung im Breitband-Kommunkationssystem eingespart werden.

Wegen der Synchronität des digitalen Netzes kann für alle Bildfernsprechsignale dieselbe Zeilenfrequenz verwendet werden, welche vorteilhaft aus der festliegenden Systemtaktfrequenz des Netzes gewonnen wird.

Die in den Bildfernsprechern enthaltenen Kameras können direkt mit der neuen Zeilenfrequenz synchronisiert werden. Die Kameras haben in der Regel zumindest intern eine RGB- (oder YUV-) Schnittstelle. Ihre Ausgangssignale brauchen also nicht erst PAL-codiert und decodiert werden, was zu einer Verbesserung der Bildqualität führt. Alle Bildfernsprech- und Fernsehprogrammsignale weisen nach diesen Maßnahmen die exakt gleiche Zeilen- und Bildfrequenz auf.

Jeder Kamera ist ein Codierer zur Umwandlung des abgegebenen Fernsehsignals in ein digitales Signal zuge-

0063639

ordnet. Besonders vorteilhaft ist es, wenn zum Zweck der Reduktion der notwendigen Bitrate in der Zentrale für die ankommenden Fernsehprogrammsignale und bei den Bildfernsprechkameras in den Teilnehmerstationen Umsetzer und in den zugehörigen Empfängern in den Teilnehmerstationen Rückumsetzer für eine Übertragung mittels Differenz-Pulscodemodulation (DPCM) vorgesehen sind.

Dabei ist vorausgesetzt, daß von außen empfangene Bildfernsprechsignale ebenfalls mittels DPCM codiert sind. Ein entsprechendes Verfahren zur Codierung von Fernsehsignalen mit DPCM ist beispielsweise aus den "Rundfunktechnischen Mitteilungen", 20 (1976) Heft 6, Seiten 236 bis 241 bekannt.

Die Abtastfrequenz der Luminanz beträgt dabei 8,8 MHz. Das ist die zweifache Farbhilfsträgerfrequenz und ein ungerades Vielfaches der halben Zeilenfrequenz (abgesehen vom 25 Hz Versatz). Die Chrominanzkomponenten werden mit 2,2 MHz abgetastet. Das ist die halbe Farbhilfsträgerfrequenz. Die Codierung erfolgt mit 4-Bit-DPCM. Die beiden Chrominanzsignale werden zeilensequentiell übertragen. Außerdem wird während einer Vollbildperiode nur ein Chrominanzhalbbild übertragen, das durch Mittelung der beiden ursprünglichen Chrominanzbilder entsteht.

Vorteilhaft ist es, die Abtastfrequenz für die Luminanz gleich dem 567,5-fachen der Zeilenfrequenz zu wählen, da dies näherungsweise der zweifachen PAL-Farbträgerfrequenz entspricht. Dies erleichtert die Rückumwandlung des komponentenweise codierten Signals in ein PAL-Signal, beispielsweise zum Zweck der Videoaufzeichnung mit Recordern mit PAL-Eingang.

0063639

Wie es aus den zitierten Rundfunktechnischen Mitteilungen bekannt ist, ist es vorteilhaft, wenn Pufferspeicher vorgesehen sind, mit denen eine Geschwindigkeitstransformation derart vorgenommen wird, daß die Horizontal-Austastlücken nicht mitübertragen werden. Die dadurch gewonnenen Zeiträume können somit zur Übertragung von Bildinformation genutzt werden.

Besonders günstig ist in einem derartigen Breitbandkommunkationssystem der Einsatz von Farbfernsehempfängern, in welchen die digitalen Komponentensignale nach Decodierung und Umsetzung in R-, G-, B-Signale unmittelbar den Eingängen der RGB-Verstärker zugeführt werden und in welchen daher Tuner, ZF-Teil und PAL-Demodulator entfallen können.

Zur Aufrechterhaltung der Kompatibilität ist es aber auch möglich, Farbfernsehempfänger für FBAS-Signale vorzusehen, denen ein Komponentensignal/FBAS-Signal-Umsetzer und ein Decodierer zur Rückumwandlung in das analoge Signal vorgeschaltet sind.

Wie bereits erläutert, ist es auch vorteilhaft, wenn eine Zentrale und Farbfernsehempfänger für eine zeilenweise abwechselnde Übertragung der Farbkomponenten vorgesehen sind, sowie wenn pro übertragenem Vollbild nur Farbinformation entsprechend der einem Halbbild zugeordneten Informationsmenge übertragen wird.

Das beschriebene System erlaubt eine Übertragung jedes Fernseh- oder Bildfernsprechsignals inklusive Begleitton mit einer Datenrate von 34,368 Mbit/s entsprechend der dritten Stufe der PCM-Hierarchie.

Zur Übertragung des Fernseh-Begleittons ist es möglich, einen oder zwei Tonkanäle mit der zweifachen oder dreifachen Zeilenfrequenz abzutasten und mit 14 oder 16 Bit zu digitalisieren. Diese vier bis sechs PCM-Codeworte (56...94 Bit) können am Beginn oder Ende jeder Zeile in das Datensignal des Videosignals eingefügt werden.

Anhand eines Ausführungsbeispiels wird die Erfindung nachstehend näher erläutert.

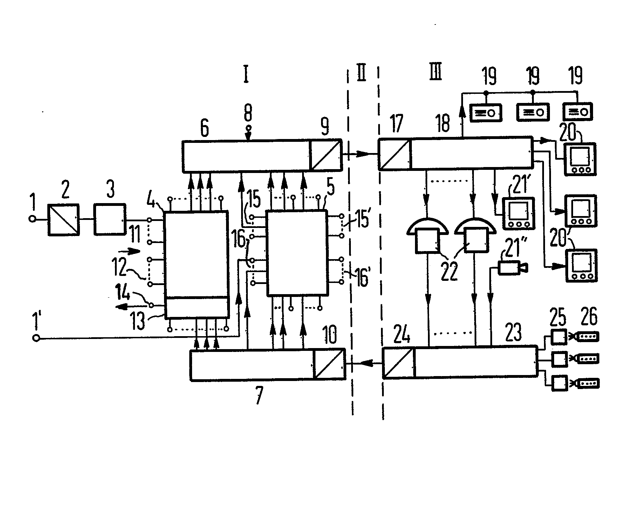

Die Figur zeigt ein erfindungsgemäßes digitales Breitband-Kommunkationssystem mit einer Zentrale I, Glasfasern II und einer Teilnehmerstation III.

Die Zentrale I enthält einen Eingang 1 für Fernsehprogramme, einen FBAS-Signal/Komponentensignal-Umsetzer und Codierer 2 und eine Zeilenfrequenz-Synchronisiereinrichtung 3. Derartige Kettenschaltungen sind so oft vorhanden, wie der Zahl der empfangenen Fernsehprogramme entspricht, und sind über Anschlüsse 11 mit einer Fernsehprogramm-Vermittlung 4 verbunden. Mehrere Anschlüsse für Farbbildfernsprech-Signale, von denen nur ein Eingang 1' eingezeichnet ist, sind über Anschlüsse 16 mit einer Fernsprech- und Bildfernsprechvermittlung 5 verbunden, die weiter Anschlüsse 15 für Fernsprechsignale aufweist. Von den Anschlüssen 15' können Fernsprechsignale und an den Anschlüssen 16' können Bildfernsprechsignale an das öffentliche Netz abgegeben werden. Für die Teilnehmerstation III bestimmte Signale der Fernsehprogramm-Vermittlung 5 und des Anschlusses 8 für Tonprogramme werden in einem Multiplexer 6 zusammengefaßt und über einen elektrooptischen Umsetzer 9 zur Teilnehmerstation III ausgesendet. Von dieser ankommende Signale gelangen über einen optoelektrischen Umsetzer 10 und einen Demultiplexer 7 zur, über eine Mikrocomputer-Kontrolleinrichtung 13 gesteuerte Fernsehprogramm-Vermittlung 4 und zur Fernsprech- und Bildfernsprech-Vermittlung 5. An einem Anschluß 14 der Mikrocomputer-Kontrolleinrichtung 13 können Rückkanalsignale abgenommen werden.

Die Teilnehmerstation III enthält einen optoelektrischen Umsetzer 17, einen Demultiplexer 18, Tonprogrammempfänger 19, Farbfernsehempfänger 20, einen Bildfernsprech-Apparat 21, Fernsprechapparate 22, einen Multiplexer 23, einen elektrooptischen Umsetzer 24, Signalempfänger 25 und Fernsteuergeräte 26.

Dieses System unterscheidet sich durch den FBAS-Signal/Komponentensignal-Umsetzer und Codierer 2, durch die Zeilenfrequenz-Synchronisiereinrichtungen 3, durch die Farbfernsehempfänger 20 und durch den Bildfernsprech-Apparat 21 vom bekannten System. Die Farbfernsehempfänger 20 können unmittelbar Komponentensignale verarbeiten, der Bildfernsprech-Apparat 21 vermag solche auszusenden.

An den Eingang 1 wird ein Fernsehprogrammsignal angelegt. Dieses wird im FBAS-Signal/Komponentensignal-Umsetzer und Codierer 2 in digitale Komponentensignale umgesetzt. Diese werden über die Zeilenfrequenz-Synchronisiereinrichtung 3 der Fernsehprogramm-Vermittlung 4 zugeführt. Die Einrichtungen für die Eingabe des Begleittons wurden der Übersichtlichkeit halber weggelassen.

Über den Eingang 1' wird ein Bildfernsprechsignal der Fernsprech- und Bildfernsprech-Vermittlung 5 zugeführt. Diese Signale sowie aus dem Breitband-Kommunikationssystem selbst empfangene Signale werden im Multiplexer 6 zu einem Zeitmultiplexsignal zusammengefaßt, das als optisches Signal über eine Glasfaser II zu einem Teilneh-

0063639

mer III übertragen wird. Dort gelangen sie nach Umsetzung in ein elektrisches Signal in den Demultiplexer 18, der die Einzelsignale dem Tonprogrammempfänger 19, dem Farbfernsehempfänger 20, dem Bildfernsprech-Apparat 21 und den Fernsprechapparaten 22 zuführt. Die in der Teilnehmerstation III erzeugten Fernsprech- und Bildfernsprechsignale sowie die von den Signalempfängern 25 stammenden Signale werden im Multiplexer 23 zu einem Zeitmultiplexsignal zusammengefaßt und nach Umsetzung in optische Signale über eine andere Glasfaser II dem Demultiplexer 7 der Zentrale I zugeführt, die die Einzelsignale wiederum an die Vermittlungen 4 und 5 abgibt.

9 Patentansprüche
1 Figur

0063639

Patentansprüche

1. Digitales Breitband-Kommunikationssystem,
bei dem von einer Zentrale (I) über Glasfasern (II) Fernsehprogrammsignale für Farbe oder Schwarz-Weiß, Tonprogrammsignale, Bildfernsprechsignale für Farbe oder Schwarz-Weiß, Fernsprechsignale und beliebige andere Signale zu Teilnehmerstationen und bei dem von diesen in Gegenrichtung Bildfernsprechsignale für Farbe oder Schwarz-Weiß, Fernsprechsignale und beliebige Rückkanalsignale übertragen werden können,
bei dem die Zentrale (I) die Signale aus dem öffentlichen Netz und/oder von sonstigen Zulieferern und/oder aus eigener Erzeugung oder Speicherung empfängt, vermittelt, zu einem Zeitmultiplexsignal zusammensetzt, in optische Signale umsetzt und zu den Teilnehmerstationen (III) aussendet,
bei dem die Teilnehmerstationen (III) die bei ihnen erzeugten Signale zu Zeitmultiplexsignalen zusammensetzen, in optische Signale umsetzen und zur Zentrale (I) aussenden und
bei dem die von außen empfangenen Fernsehprogrammsignale für Farbe FBAS-Signale oder Komponentensignale und die von außen empfangenen digitalen Bildfernsprechsignale für Farbe Komponentensignale sind,
d a d u r c h   g e k e n n z e i c h n e t ,
daß an der Schnittstelle des Systems zu Zulieferern für ankommende Fernsehprogrammsignale in der Zentrale (I) FBAS-Signal/Komponentensignal-Umsetzer und Codierer (2) vorgesehen sind,
daß in der Zentrale (I) mit diesen Umsetzern und Codierern (2) integriert oder diesen nachgeschaltete Einrichtungen (3)

0063639

zur Zeilenfrequenzsynchronisation vorgesehen sind,
daß in den Teilnehmerstationen (III) Farbfernsehempfänger
(20) für den Empfang von Komponentensignalen vorgesehen
sind und
daß in den Teilnehmerstationen (III) Farb-Bildfernsprech-
apparate (21) vorgesehen sind, die zeilenfrequenzsynchronisierte Komponentensignale zur Zentrale (I) aussenden.

2. System nach Anspruch 1, bei dem differenz-pulscodemodulierte (DPCM-) Bildfernsprechsignale von außen empfangen werden, d a d u r c h  g e k e n n z e i c h n e t ,
daß in der Zentrale (I) für die ankommenden Fernsehprogrammsignale und bei den Bildfernsprechkameras (21") in
den Teilnehmerstationen (III) Umsetzer und in den zugehörigen Empfängern in den Teilnehmerstationen (III) Rückumsetzer für eine Übertragung mittels DPCM vorgesehen sind.

3. System nach Anspruch 2, d a d u r c h  g e k e n n -
z e i c h n e t , daß die Abtastfrequenz für die Luminanz
gleich dem 567,5-fachen der zugeordneten Zeilenfrequenz
gewählt ist.

4. System nach Anspruch 2, d a d u r c h  g e k e n n -
z e i c h n e t , daß Pufferspeicher vorgesehen sind,
mit denen eine Geschwindigkeitstransformation derart vorgenommen wird, daß die Horizontal-Austastlücken nicht mitübertragen werden.

5. System nach Anspruch 1 oder 2, d a d u r c h  g e -
k e n n z e i c h n e t , daß Farbfernsehempfänger vorgesehen sind, die die digitalen Komponentensignale
unmittelbar verarbeiten.

6. System nach Anspruch 1 oder 2, d a d u r c h  g e -
k e n n z e i c h n e t  , daß Farbfersehempfänger für
FBAS-Signale vorgesehen sind, denen ein Komponentensignal/
FBAS-Signal-Umsetzer und ein Decodierer vorgeschaltet
sind.

7. System nach Anspruch 1, d a d u r c h  g e k e n n -
z e i c h n e t  , daß eine Zentrale und Farbfernsehempfänger für eine zeilenweise abwechselnde Übertragung der
Farbkomponenten vorgesehen sind.

8. System nach Anspruch 1, d a d u r c h  g e k e n n -
z e i c h n e t  , daß eine Zentrale und Farbfernsehempfänger vorgesehen sind, bei denen pro übertragenem Vollbild
nur Farbinformation entsprechend der einem Halbbild
zugeordneten Informationsmenge übertragen wird.

9. System nach einem der vorgehenden Ansprüche,
d a d u r c h  g e k e n n z e i c h n e t  , daß eine
Übertragungsgeschwindigkeit von 34,368 Mbit/s pro Fernsehprogramm- und/oder Bildfernsprechsignal mit Begleitton
vorgesehen ist.